# DEMANDE DE BREVET EUROPEEN

(11) **EP 1 700 881 A1**
(43) Date de publication de la demande: **13.09.2006**
(21) Numéro de dépôt: 06290384.4
(22) Date de dépôt: 09.03.2006
(51) Int. Cl.: C08J 11/16

(54) **Procédé de traitement de pneumatiques, déchiquetas et résidus de pneumatiques**

(30) Priorité: 11.03.2005 FR 0502434
(71) Demandeur: Sables Graviers Services (S.G.S.), 63300 Thiers (FR)
(72) Inventeur: Misson, Daniel Gérard, 03200 Le Vernet (FR)
(74) Mandataire: Hammond, William

(57) **Abrégé**

Procédé de traitement de pneumatiques, déchiquetas et résidus de pneumatiques ou co-produits, qui comporte une phase de traitement desdits co-produits par un produit de traitement à base de chaux choisi parmi les produits suivants :
- les chaux aériennes vives, composées majoritairement d'oxyde de calcium de formule chimique CaO, sous forme de poudre ou de morceaux de granulométrie comprise dans la fourchette 0 à 150 mm ;
- les chaux aériennes éteintes composées majoritairement d'hydroxyde de calcium de formule Ca(OH)₂, sous forme de poudre ;
- les mélanges de chaux aérienne vive et de chaux aérienne éteinte, la proportion de chacun des éléments pouvant varier de 0,5 à 99, 5% en poids ;
- des suspensions de chaux hydratée préparée soit à partir de chaux aérienne vive telle que définie ci-dessus, soit à partir de chaux aérienne éteinte telle que définie ci-dessus, soit à partir d'un mélange de chaux aérienne vive et de chaux hydratée telle que ci-dessus; la concentration en Ca(OH)₂ de ces suspensions variant de 25g/l à 1000g/l ;
- des suspensions de chaux hydratée telles que définies ci-dessus additionnées de siccatifs d'origine naturelle tels que caséine, latex, gomme arabique, ou industrielle.

Application au traitement et à la valorisation des pneumatiques, déchiquetas et résidus de pneumatiques ou co-produits.

## Description

La présente invention est relative à un procédé pour traiter des pneumatiques, déchiquetas et résidus de pneumatiques.

L'augmentation du trafic automobile et du transport routier a entraîné une croissance très rapide du nombre des pneumatiques usagés qui sont pour leur grande majorité stockés en décharges et très rarement valorisés. A terme, ceci pose des problèmes de stockage compte tenu des volumes engendrés et des risques de pollution du milieu naturel, que ces risques soient avérés ou non. Aussi des techniques de broyage ont-elles été mises au point pour réduire les vides ; mais elles génèrent des déchets qui sont eux aussi stockés dans des décharges ou mis dans des remblais routiers sans respect du principe de précaution.

Par ailleurs, lors du stockage en décharges de pneumatiques ou de déchets obtenus à partir de ceux-ci, il a été constaté l'apparition d'incendies par auto-inflammation. Ce phénomène est du au développement de bactéries ayant pour origine la corrosion des armatures métalliques présentes dans les pneumatiques et mises à nu soit lors des opérations de broyage, soit suite à une usure poussée du pneumatique ou à une destruction accidentelle de celui-ci. Cette combustion accidentelle provoque des pollutions graves du sol, de l'air et de l'eau de surface puis des nappes phréatiques par infiltration.

On connaît des documents tels que GB-28265-A, GB-17643-A, qui décrivent des procédés utilisant la chaux pour traiter des pneumatiques ou autres co-produits, mais jamais en vue de leur stockage et leur réutilisation sans risque pour l'environnement.

Dans la suite de la présente description, dans un but de simplification, on utilisera le terme de « co-produits » pour désigner aussi bien l'ensemble constitué par les pneumatiques et les déchets obtenus par broyage de ceux-ci, que chacun des constituants de cet ensemble. Les composés de ces co-produits sont essentiellement les armatures métalliques, les toiles de renfort, le caoutchouc d'origine naturelle ou artificielle.

Aussi un des buts de la présente invention est-il de fournir un procédé pour traiter de tels co-produits afin de les transformer en véritables matériaux réutilisables sans risques pour l'environnement et d'en empêcher toute dégradation lors du stockage.

Un autre but de l'invention est de fournir un tel procédé qui permet d'éviter le développement des bactéries.

Un but supplémentaire de la présente invention est de fournir un tel procédé permettant d'obtenir des produits destinés notamment à la construction d'ouvrages entrant dans le cadre du développement durable.

Ces buts, ainsi que d'autres qui apparaîtront dans la suite, sont atteints par un procédé de traitement de co-produits tels que des pneumatiques, déchiquetas et résidus de pneumatiques ou leurs mélanges, comportant une phase de traitement des co-produits par un produit de traitement à base de chaux, lequel procédé est caractérisé par le fait que, selon la présente invention, le produitt de traitement à base de chaux est choisi parmi les produits suivants :
- les chaux aériennes vives, qui sont composées majoritairement d'oxyde de calcium de formule chimique CaO, sous forme de poudre ou de morceaux de granulométrie comprise dans la fourchette 0 à 150 mm ;
- les chaux aériennes éteintes, qui sont composées majoritairement d'hydroxyde de calcium de formule Ca(OH)₂, sous forme de poudre ;
- les mélanges de chaux aérienne vive et de chaux aérienne éteinte, la proportion de chacun des éléments pouvant varier de 0,5 à 99, 5% en poids ;
- des suspensions de chaux hydratée préparée soit à partir de chaux aérienne vive telle que définie ci-dessus, soit à partir de chaux aérienne éteinte telle que définie ci-dessus, soit à partir d'un mélange de chaux aérienne vive et de chaux hydratée telle que ci-dessus; la concentration en Ca(OH)₂ de ces suspensions varie de 25g/l à 1000g/l;
- des suspensions de chaux hydratée telles que définies ci-dessus additionnées de siccatifs d'origine naturelle tels que caséine, latex, gomme arabique, ou industrielle.

De préférence, la phase de traitement est réalisée selon une technique choisie parmi les techniques suivantes :
- arrosage ou pulvérisation;
- malaxage dans un tambour ;
- trempage dans un bassin.

Avantageusement, les co-produits sont, avant la phase de traitement, soumis à un traitement préalable.

De préférence, le traitement préalable comporte une phase de préparation au cours de laquelle on applique aux co-produits de l'eau ou un lait de chaux.

Avantageusement, lors de cette phase de préparation, on utilise un lait de chaux, dont la concentration en chaux aérienne éteinte Ca(OH)₂ est comprise entre 1g/l et 1000g/l et dont le pH est supérieur à 12.

De préférence, le traitement préalable comporte une seconde phase dite phase de pré-imprégnation au cours de laquelle les co-produits issus de la phase de préparation sont mis en présence de réactifs d'accrochage.

Selon un premier mode de réalisation, on utilise comme réactifs d'accrochage des produits siccatifs d'origine naturelle tels que caséine, latex, gomme arabique, ou industrielle.

Selon un second mode de réalisation, on utilise comme réactifs d'accrochage des suspensions de chaux concentrées de 25 g/l à 1000 g/l de Ca(OH)₂.

Selon un troisième mode de réalisation de la présente invention, on utilise comme réactif d'accrochage un mélange d'une suspension de chaux concentrée de 25 g/l à 1000 g/l de Ca(OH)₂ et d'un produit siccatif d'origine naturelle tel que caséine, latex, gomme arabique, ou industrielle.

La description qui suit et qui ne présente aucun caractère limitatif, a notamment pour but de permettre à l'homme de métier de mettre en oeuvre la présente invention.

Selon celle-ci, on soumet les co-produits tels que définis ci-dessus à un procédé de traitement comportant une phase de traitement par un produit de traitement à base de chaux choisi parmi les produits suivants :
- les chaux aériennes vives, qui sont composées majoritairement d'oxyde de calcium de formule chimique CaO, sous forme de poudre ou de morceaux de granulométrie comprise dans la fourchette 0 à 150 mm ;
- les chaux aériennes éteintes, qui sont composées majoritairement d'hydroxyde de calcium de formule Ca(OH)₂, sous forme de poudre ;
- les mélanges de chaux aérienne vive et de chaux aérienne éteinte, la proportion de chacun des éléments pouvant varier de 0,5 à 99, 5% en poids ;
- des suspensions de chaux hydratée préparée soit à partir de chaux aérienne vive telle que définie ci-dessus, soit à partir de chaux aérienne éteinte telle que définie ci-dessus, soit à partir d'un mélange de chaux aérienne vive et de chaux hydratée telle que ci-dessus; la concentration en Ca(OH)₂ de ces suspensions varie de 25g/l à 1000g/l ;
- des suspensions de chaux hydratée telles que définies ci-dessus additionnées de siccatifs d'origine naturelle tels que caséine, latex, gomme arabique, ou industrielle.

La mise en contact des co-produits et du produit de traitement à base de chaux peut être réalisée selon diverses techniques, parmi lesquelles on citera sans que cela soit limitatif :
- par simple arrosage ou pulvérisation du tas de co-produits stockés sur une aire étanche pour permettre la récupération des liquides de ruissellement: le liquide qui ruisselle est alors réutilisé après contrôle de son pH. Si le pH est inférieur à 12, il doit être enrichi en produit de traitement à base de chaux préalablement préparé pour remonter le pH à 12 avant d'être à nouveau pulvérisé sur le tas de co-produits. Ce tas sera alors remué périodiquement avec des engins de travaux publics pour assurer une répartition du produit de traitement à base de chaux sur toutes les faces des co-produits.
- par malaxage dans un tambour en charges successives: les co-produits sont introduits dans le tambour avec le produit de traitement sous forme d'une suspension à base de chaux. La quantité et la concentration du produit de traitement sont établies pour avoir un pH de 12 tout au long du malaxage. Les co-produits traités sont alors mis en tas, le liquide résiduel dans le tambour est additionné de nouveau produit de traitement pour maintenir un pH de 12 lors du traitement de préparation de la charge suivante.
- par mélange en continu dans un tambour rotatif constitué d'une virole pleine ou perforée et dans lequel on introduit les co-produits et le produit de traitement sous forme liquide. Le liquide injecté dans le tambour est enrichi en permanence avec du produit de traitement pour maintenir un pH supérieur à 12.
- par trempage dans un bassin de produit de traitement à base de chaux dans lequel le temps de séjour varie de 1 seconde à 2 jours: la quantité de produit de traitement doit être telle que tous les co-produits soient immergés; de plus, sa concentration doit permettre le maintien d'un pH dans le bassin toujours supérieur à 12.

Les co-produits traités sont ensuite soit:
- stockés sous hangar pour permettre la carbonatation et le séchage du réactif utilisé. Le temps nécessaire est fixé au cours d'essais préalables.
- mis en oeuvre comme produits de remplissage dans des cellules de stockage: ils seront dans ce cas protégés des intempéries jusqu'à couverture de la cellule par d'autres matériaux.
- incorporés dans des bétons en mélange avec des coulis ou des mortiers afin de combler les vides interstitiels.
- mélangés à des matériaux ou des sols préalablement traités à la chaux ou avec des suspensions de chaux.

Mais, il se peut que les co-produits doivent subir auparavant un traitement préliminaire, qui comprend une ou deux phases: une phase de préparation et une phase de pré-imprégnation.

Ainsi, si les co-produits n'ont pas été préalablement nettoyés, car ils ont pu être pollués, en particulier par des graisses, lors de leur utilisation ou lors de leur stockage, il est nécessaire de les soumettre à une phase de préparation au cours de laquelle on appliquera de l'eau sans aucune addition ou un lait de chaux à ces co-produits.

Dans le cas de l'utilisation d'un lait de chaux, la concentration en chaux aérienne éteinte Ca(OH)₂ est comprise entre 1g/l et 1000g/l: d'ailleurs, on appellera lait de chaux toute suspension contenant de la chaux hydratée et pompable par pompe centrifuge. Le pH du liquide préparé et de celui en contact avec les co-produits doit toujours être supérieur a 12.

L'application du lait de chaux peut se faire suivant plusieurs techniques, telles que celles mises en oeuvre lors de la phase de traitement décrite ci-dessus.

La seconde phase, phase de pré-imprégnation, du traitement préliminaire ne sera mise en oeuvre que si les tests préalables réalisés sur les co-produits à traiter ont conclu à sa nécessité. Sinon les co-produits issus de la phase de préparation seront directement soumis à la phase de traitement.

Lors de cette seconde phase du traitement préliminaire, on utilise des réactifs d'accrochage qui sont soit des produits siccatifs d'origine naturelle tels que caséine, latex, gomme arabique, ou industrielle, soit des suspensions de chaux concentrées de 25g/l à 1000 g/l de Ca(OH)₂. On définit par siccatifs tout produit permettant de faire adhérer aux co-produits les chaux et dérivés de chaux tels que définis ci-dessus en regard avec la phase de traitement.

La technique de pré-imprégnation utilisée peut être choisie parmi les techniques de la phase de préparation en remplaçant le lait de chaux ou l'eau par des siccatifs qui permettent l'adhérence de la chaux ou des suspensions de chaux concentrées tels que définies ci-avant.

Les co-produits issus de cette phase de pré-imprégnation sont alors stockés sous hangar ou soumis directement à la phase de traitement.

Les co-produits issus de la phase de traitement selon le présent procédé ne présentent aucun risque pour l'environnement, ne permettent le développement d'aucune bactérie et/ou champignon et ne sont pas sensibles à la corrosion: ils ont été passivés.

Une explication de ce résultat serait que l'on obtiendrait une passivation des armatures métalliques et une protection des parties traitées en raison du pouvoir bactéricide et fongicide de la chaux.

Pour maintenir l'effet de passivation dans le temps, les co-produits ainsi traités seront :
- soit stockés dans des cellules qui sont :
   - rendues étanches à l'air et à l'eau par tout moyen approprié,
   - ou réalisées en matériaux traités avec de la chaux à un dosage qui permet de garantir un pH > 12 de manière durable ;
- soit mélangés avec des matériaux ou des sols naturels traités à la chaux: le mélange (co-produit et matériaux) pourra être ensuite disposé dans des cellules telles que décrites précédemment ou tout, simplement mis en remblais pour la construction d'ouvrages routiers ou ferroviaires.

Au plan économique, pour réduire les coûts de mise en oeuvre du traitement par une limitation du nombre de phases, une variante regroupant l'ensemble des phases de traitement préliminaire et de traitement proprement dit en une seule phase pourra être mise en oeuvre.

Le co-produit traité peut alors être encagé dans des ouvrages de remblaiement, pour la construction de talus en mélange avec des matériaux traités à la chaux, pour le comblement de cavités ou comme charge de remplissage dans des bétons, en mélange avec des coulis de mortiers qui assurent le remplissage des vides.

Un mélange co-produit non traité avec des matériaux ou du sol naturel pourra être traité à la chaux puis mis en oeuvre pour la constitution d'ouvrages ou le stockage dans des cellules tels que décrits précédemment afin de maintenir le pH à un niveau toujours supérieur à 12.

Idéalement le dosage de chaux - équivalent CaO sous forme de matière sèche - doit être supérieur à 4% du poids sec du matériau ou du sol naturel traité. Le sol sera suffisamment fin pour remplir les espaces entre les co-produits. Le rapport co-produit /sol /chaux sera déterminé par la réalisation d'un essai similaire à l'essai Proctor utilisé en géotechnique pour le traitement des sols et qui détermine la densité optimale du mélange à partir de la quantité de co-produits utilisés et du sol disponible.

Pour la réalisation des remblais, l'ouvrage réalisé devra alors obéir aux spécifications de portance relatives aux remblais et reprises dans la norme NF 11-300 connue de l'homme de l'art sous la dénomination Guide technique GTR de 1992 pour la réalisation des remblais et des couches de forme.

Les co-produits traités et ou le mélange de ces co-produits avec des matériaux ou des sols traités font partie des matériaux de la Classe F, famille de matériaux F9 : autres déchets et sous produits industriels.

Ainsi que l'homme du métier le comprendra, le traitement préalable sera le plus souvent déterminé en fonction d'un essai des différentes phases du procédé selon l'invention sur échantillon du co-produit à traiter ; les échantillons sont conservés pendant un certain temps à 20°C dans une atmosphère contenant 70% d'eau. On observe s'ils présentent des taches rouges révélant une reprise d'oxydation : le traitement retenu sera celui ne conduisant pas à cette reprise d'oxydation.

## Revendications

1. Procédé de traitement de pneumatiques, déchiquetas et résidus de pneumatiques ou co-produits, comportant une phase de traitement desdits co-produits par un produit de traitement à base de chaux, **caractérisé par le fait que** le produit de traitement à base de chaux est choisi parmi les produits suivants :
- les chaux aériennes vives, composées majoritairement d'oxyde de calcium de formule chimique CaO, sous forme de poudre ou de morceaux de granulométrie comprise dans la fourchette 0 à 150 mm ;
- les chaux aériennes éteintes composées majoritairement d'hydroxyde de calcium de formule Ca(OH)₂, sous forme de poudre;
- les mélanges de chaux aérienne vive et de chaux aérienne éteinte, la proportion de chacun des éléments pouvant varier de 0,5 à 99, 5% en poids;
- des suspensions de chaux hydratée préparée soit à partir de chaux aérienne vive telle que définie ci-dessus, soit à partir de chaux aérienne éteinte telle que définie ci-dessus, soit à partir d'un mélange de chaux aérienne vive et de chaux hydratée telle que ci-dessus; la concentration en Ca(OH)₂ de ces suspensions variant de 25g/l à 1000g/l;
- des suspensions de chaux hydratée telles que définies ci-dessus additionnées de siccatifs d'origine naturelle tels que caséine, latex, gomme arabique, ou industrielle.

2. Procédé selon la revendication 1, **caractérisé par le fait que** la phase de traitement est réalisée selon une technique choisi parmi les techniques suivantes :
- arrosage ou pulvérisation ;
- malaxage dans un tambour ;
- trempage dans un bassin.

3. Procédé selon la revendication 1, **caractérisé par le fait que** les co-produits sont, avant la phase de traitement, soumis à un traitement préalable.

4. Procédé selon la revendication 3, **caractérisé par le fait que** le traitement préalable comporte une phase de préparation au cours de laquelle on applique aux co-produits de l'eau ou un lait de chaux.

5. Procédé selon la revendication 4, **caractérisé par le fait qu'**on utilise un lait de chaux, dont la concentration en chaux aérienne éteinte Ca(OH)₂ est comprise entre 1g/l et 1000g/l et dont le pH est supérieur à 12.

6. Procédé selon la revendication 3, **caractérisé par le fait que** le traitement préalable comporte une seconde phase dite phase de pré-imprégnation au cours de laquelle les co-produits issus de la phase de préparation sont mis en présence de réactifs d'accrochage.

7. Procédé selon la revendication 6, **caractérisé par le fait qu'**on utilise comme réactifs d'accrochage des produits siccatifs d'origine naturelle tels que caséine, latex, gomme arabique, ou industrielle.

8. Procédé selon la revendication 6, **caractérisé par le fait qu'**on utilise comme réactifs d'accrochage des suspensions de chaux concentrées de 25g/l à 1000 g/l de Ca(OH)₂.

9. Procédé selon la revendication 6, **caractérisé par le fait qu'**on utilise comme réactifs d'accrochage un mélange d'une suspension de chaux concentrée de 25g/l à 1000 g/l de Ca(OH)₂ et d'un produit siccatif d'origine naturelle tel que caséine, latex, gomme arabique, ou industrielle.
